# EUROPÄISCHE PATENTANMELDUNG

(11) **EP 1 249 608 A1**
(43) Veröffentlichungstag der Anmeldung: **16.10.2002**
(21) Anmeldenummer: 01125280.6
(22) Anmeldetag: 24.10.2001
(51) Int. Cl.: F04C 15/00, B29C 47/50, B29C 47/82

(54) **Vorrichtung mit einer Zahnradpumpe und einem Direktantrieb sowie eine Extrusionsanlage**

(71) Anmelder: Maag Pump Systems Textron AG, 8023 Zürich (CH)
(72) Erfinder: Pokladek, Thomas, 40885 Ratingen-Lintorf (DE); Heinen, Michael, 8049 Zürich (CH)
(74) Vertreter: Troesch Scheidegger Werner AG

(57) **Zusammenfassung**

Eine Vorrichtung mit einer Zahnradpumpe (1) ist offenbart, die aus einem Gehäuse und aus zwei ineinandergreifenden Zahnrädern besteht, wobei mindestens eines der Zahnräder auf einer Welle angeordnet ist, die durch das Gehäuse nach aussen geführt ist und die mit einer Antriebseinheit wirkverbunden ist. Erfindungsgemäss ist die Antriebseinheit ein getriebeloser Direktantrieb (2). Hierdurch wird ein vereinfachter und damit kostengünstiger Antriebsstrang erhalten, der erheblich geringeren Wartungsaufwand erforderlich macht als bekannten Anlagen.

## Beschreibung

Die vorliegende Erfindung betrifft eine Vorrichtung nach dem Oberbegriff des Patentanspruchs 1 sowie eine Extrusionsanlage mit der Vorrichtung.

Insbesondere bei der Herstellung von Kunststofffolien kommen sowohl Extruder als auch Zahnradpumpen, und zwar einzeln als auch in Kombination, zum Einsatz. Dabei wird ein Polymer mit Hilfe der Extruder und/oder der Zahnradpumpen durch einen Spritzkopf gepresst, der entsprechend einer herzustellenden Form des Extrudates ausgebildet ist. Gerade bei der Herstellung von Folien und dünnen Platten sind die Anforderungen an das Extrudat bezüglich Toleranzen sehr hoch, so dass dort vermehrt eine, in besonderen Fällen auch mehrere Zahnradpumpen in einer Anlage zum Einsatz kommen.

Bei der Verarbeitung von Kunststoffen, insbesondere zur Herstellung von Folien oder dünnen Platten, ist zu beachten, dass die Fliesslänge für das zu verarbeitende Material möglichst kurz gehalten wird. Entsprechend sind die Anlagen zur Verarbeitung der Kunststoffe möglichst kurz auszubilden. Als Folge davon müssen die verwendeten Anlagekomponenten, d.h. Zahnradpumpen und Extruder inkl. deren Antriebe und dazugehörenden Komponenten wie Gelenkwellen und notwendige Getriebe, auf engstem Raum angeordnet werden. Dabei ist der Umstand als zusätzlich limitierend anzusehen, dass der oberhalb der Anlageebene an sich zur Verfügung stehende Raum nicht bzw. nur eingeschränkt benutzt werden darf, weil die einzelnen Komponenten der Anlage einer unzulässig hohen Temperatur ausgesetzt würden, welche aufgrund einer für die Verarbeitung des Extrudates benötigten erhöhten Temperatur durch Abstrahlung entsteht. Daraus folgt, dass alle, zumindest aber der überwiegende Teil der Anlagekomponenten unterhalb der Anlageebene angeordnet werden müssen. Entsprechend ist die Platzproblematik hierdurch weiter verschärft, und zusätzliche Vorkehrungen sind zu treffen, damit die zulässigen Höchsttemperaturen bei den Anlagekomponenten nicht überschritten werden.

Es hat sich gezeigt, dass - auch wenn die maximal zulässigen Höchsttemperaturen bei den einzelnen Anlagekomponenten nicht überschritten werden - durch die erhöhte Temperatur die Lebensdauer der einzelnen Komponenten herabgesetzt ist, zumindest aber, dass die Wartungsintervalle kürzer sein müssen, damit sich die Lebensdauer der Komponenten nicht erheblich verkürzt.

Der vorliegenden Erfindung liegt daher die Aufgabe zugrunde, eine Vorrichtung anzugeben, welche die vorstehenden Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie eine Extrusionsanlage sind in weiteren Ansprüchen angegeben.

Die Erfindung weist die folgenden Vorteile auf: Indem als Antriebseinheit ein getriebeloser Direktantrieb verwendet wird, der direkt auf die Welle der Zahnradpumpe wirkt, kann auf den Einsatz einer Gelenkwelle und auf Getriebe zwischen Antrieb und Zahnradpumpe verzichtet werden. Damit vereinfacht sich die Wartung der gesamten Antriebseinheit erheblich, indem die Wartungsintervalle entsprechend verlängert werden können. Als Folge davon konnten bei der erfindungsgemässen Vorrichtung die Betriebskosten reduziert werden.

Durch die Eliminierung der zwischen Zahnradpumpe und Antrieb geschalteten Baugruppen, nämlich Getriebe und/oder Gelenkwelle, ergibt sich bei der Erfindung zusätzlich den Vorteil, dass die Elastizität des gesamten Antriebsstranges, insbesondere durch Wegfall der Spiele der eliminierten Baugruppen, minimiert wird. Die erhöhte Steifheit des Antriebsstranges hat insbesondere zur Folge, dass die Laufruhe und die Gleichmässigkeit der Rotation zunimmt. Davon profitieren insbesondere Anwendungen, bei denen eine sehr hohe Anforderung an die Gleichmässigkeit der Förderung gestellt wird, wie dies beispielsweise bei der Folienextrusion mit engen Toleranzen oder bei der Ummantelung von HF-Kabeln der Fall ist.

Die Erfindung wird nachfolgend anhand von Zeichnungen beispielsweise näher erläutert. Dabei zeigen:
- Fig. 1,: in schematischer Darstellung, eine erfindungsgemässe Vorrichtung mit einer Zahnradpumpe, bei der eine Welle angetrieben wird, und
- Fig. 2,: wiederum in schematischer Darstellung, eine weitere Ausführungsform der erfindungsgemässen Vorrichtung, bei der die Zahnradpumpe zwei Antriebswellen aufweist.

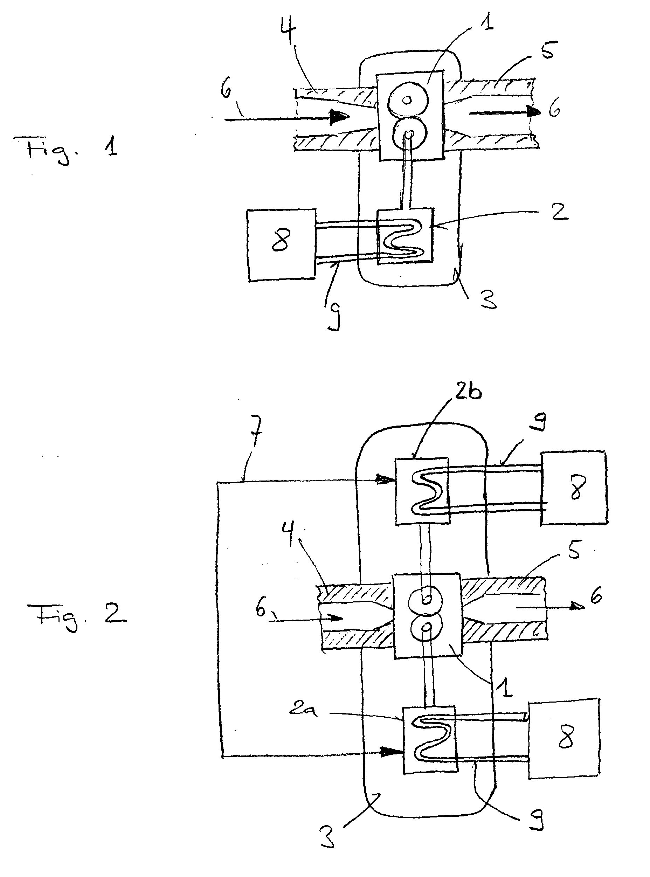

Fig. 1 zeigt in schematischer Darstellung eine erfindungsgemässe Vorrichtung mit einer Zahnradpumpe 1, bestehend aus zwei ineinandergreifenden Zahnrädern in einem Gehäuse mit einem saugseitigen und einem druckseitigen Flanschelement 4 bzw. 5, und einem getriebelosen Direktantrieb 2, der direkt mit einer durch das Gehäuse hindurchgeführten Welle wirkverbunden ist, auf der eines der Zahnräder der Zahnradpumpe 1 befestigt ist.

Während die bevorzugte Ausführungsform der erfindungsgemässen Vorrichtung darin besteht, dass der Direktantrieb 2 auf der durch das Gehäuse herausgeführten Welle angeordnet ist, ist es in einer weiteren Ausführungsform denkbar, dass zwischen dem Direktantrieb 2 und der Zahnradpumpe 1 ein Kupplungsstück (in Fig. 1 nicht dargestellt) vorgesehen ist, über das der Direktantrieb 2 mit der Zahnradpumpe bzw. mit der aus dessen Gehäuse herausgeführten Welle verbunden ist. Bei dem Kupplungsstück ist es jedoch in keinem Fall vorgesehen, dass dieses im Sinne eines Getriebes wirkt. Es handelt sich beim Kupplungsstück also um eine steife Verbindung, welche beispielsweise die Demontage der betroffenen Zahnradpumpe 1 bzw. des betroffenen Direktantriebes 2 erleichtern soll.

In einer weiteren Ausführungsform der erfindungsgemässen Vorrichtung ist eine Temperiereinheit 8 vorgesehen, welche mit einem Temperiermediumtransportsystem 9 verbunden ist, die zum Zwecke der Temperatureinstellung im Direktantrieb 2 zu diesem geführt ist und in geeigneter Form, beispielsweise in mäanderförmiger Anordnung, um den Direktantrieb 2 angeordnet ist. Damit ist im Bereich des Direktantriebes 2 die Wirkoberfläche des Temperiermediumtransportsystems 9 vergrössert, was einen Wärmeaustausch zwischen dem im Temperiermediumtransportsystem 9 enthaltenen Temperiermedium und dem Gehäuse des Direktantriebes 2 begünstigt. Damit ist eine weitere Voraussetzung geschaffen, die erfindungsgemässe Vorrichtung in einer Umgebung einzusetzen, bei der aufgrund von eingeschränkten Platzverhältnissen, die bei den eingangs erwähnten Extruderanlagen für die Verarbeitung von Kunststoffen - insbesondere zur Herstellung von Folien oder dünnen Platten - häufig anzutreffen sind, eine erhöhte Umgebungstemperatur herrscht, welche zu einer erhöhten Abnutzung der Anlagekomponenten führt. Mit der Temperiereinheit 8 und dem dazugehörenden Temperiermediumtransportsystem 9 kann gemäss der Erfindung die Temperatur beim Direktantrieb 2 auf einen Wert eingestellt werden, bei dem keine Schäden infolge einer zu hohen Temperatur entstehen können.

In einer weiteren Ausführungsform der Erfindung ist vorgesehen, sowohl die Zahnradpumpe 1 als auch der diese antreibende Direktantrieb 2 auf einem Ständerelement 3 anzuordnen, der aus einem Material besteht, das vorzugsweise den gleichen Temperaturkoeffizienten aufweist, wie das Material, welches für die Welle der Zahnradpumpe 1 und Teile des Direktantriebes 2 verwendet werden. Damit wird in vorteilhafter Weise erreicht, dass infolge von Temperaturunterschieden entstehende Ausdehnungen bzw. Schrumpfungen zwischen den beteiligten Komponenten auch vom Ständerelement 3 mitgemacht werden, womit im Idealfall keine Kräfte zwischen den beteiligten Komponenten entstehen können.

Gerade aufgrund von Temperaturschwankungen hat man bei bekannten Extrusionsanlagen jeweils sogenannte Gelenkwellen zwischen dem Antrieb und einem Getriebe bzw. zwischen dem Getriebe und der Zahnradpumpe vorgesehen. Diese Gelenkwellen haben die Aufgabe, allfällige aufgrund von Temperaturschwankungen entstehenden Dehnungen bzw. Schrumpfungen zwischen den Komponenten aufzufangen.

Durch die Verwendung eines Ständerelementes 3 zur Aufnahme der Zahnradpumpe 1 sowie des Direktantriebes 2 ist die Verwendung einer Gelenkwelle nicht mehr erforderlich. Mithin ist erreicht worden, die Anzahl der Komponenten zu reduzieren, was in geringeren Kosten und gleichzeitig in einem reduzierten Wartungsaufwand mündet.

In Fig. 2 ist eine weitere Ausführungsform der Erfindung dargestellt. Im Unterschied zur Ausführungsform gemäss Fig. 1 sind nunmehr beide Wellen durch das Gehäuse der Zahnradpumpe 1 nach aussen geführt. Die beiden Wellen werden bei dieser Ausführungsform der Erfindung durch je einen getriebelosen Direktantrieb 2a resp. 2b im Sinne der Erläuterungen im Zusammenhang mit der Ausführungsform gemäss Fig. 1 angetrieben. Zur Abstimmung der Drehzahlen und/oder der Winkellage der beiden Direktantriebe 2a und 2b ist eine Synchronisationsverbindung 7 zwischen den Direktantrieben 2a und 2b vorgesehen. Über diese Synchronisationsverbindung 7 werden Informationen zur Synchronisation der beiden Direktantriebe ausgetauscht, wobei es beispielsweise vorgesehen ist, dass einer der Direktantriebe 2a bzw. 2b als Master-Antrieb, welcher Vorgaben festlegt, und der andere Direktantrieb 2b bzw. 2a als Slave-Antrieb arbeitet. Weiterführende Angaben zur Steuerung eines sogenannten Doppelantriebes können beispielsweise der schweizerischen Patentschrift mit der Veröffentlichungsnummer CH-659 290 oder der europäischen Patentanmeldung mit der Anmeldenummer 98115962.7 entnommen werden.

Wie aus Fig. 2 ersichtlich ist, ist die dargestellte Ausführungsform im übrigen entsprechend derjenigen gemäss Fig. 1. So sind sowohl Temperiereinheiten 8 als auch die dazugehörenden Temperiermediumtransportsysteme 9 vorgesehen. Schliesslich wird auch bei dieser Ausführungsform der Erfindung vorgeschlagen, die getriebelosen Direktantriebe 2a und 2b sowie die Zahnradpumpe 1 auf einem Ständerelement 3 anzuordnen.

Zur Gruppe der getriebelosen Direktantriebe gehört insbesondere der sogenannte Ringmotor (auch etwa als Transversalflussmaschine bezeichnet), welcher direkt auf der anzutreibenden Welle der Zahnradpumpe angeordnet wird. Denkbar ist auch die Verwendung der geschalteten Version des Ringmotors.

In einer weiteren Ausführungsform mit Temperiereinheiten 8 ist vorgesehen, eine Zahnradpumpe mit Temperierkreislauf (in Fig. 1 und 2 nicht dargestellt) in der Extrusionsanlage einzusetzen und dabei das Temperiermedium des Temperiermediumtransportsystems gemäss Fig. 1 und 2 gleichzeitig durch den Temperierkreislauf der Zahnradpumpe fliessen zu lassen, um neben der Einstellung der Temperatur im Direktantrieb auch gleichzeitig die Temperatur in der Zahnradpumpe auf eine gewünschte Temperatur einstellen zu können. Denkbar ist bei einer weiteren Ausgestaltung der Erfindung, dass für den Temperierkreislauf eine separate Temperiereinheit zur Verfügung gestellt wird.

Für weiterführende Angaben zum Temperierkreislauf durch Zahnradpumpen sei stellvertretend auf die europäische Patentanmeldung mit der Veröffentlichungsnummer EP-0 822 336 verwiesen.

## Patentansprüche

1. Vorrichtung mit einer Zahnradpumpe (1), bestehend aus einem Gehäuse und aus zwei ineinandergreifenden Zahnrädern, wobei mindestens eines der Zahnräder auf einer Welle angeordnet ist, die durch das Gehäuse nach aussen geführt ist und die mit einer Antriebseinheit wirkverbunden ist, **dadurch gekennzeichnet, dass** die Antriebseinheit ein getriebeloser Direktantrieb (2) ist.

2. Vorrichtung nach Anspruch 1, **dadurch gekennzeichnet, dass** jedes der zwei ineinandergreifenden Zahnräder auf einer Welle angeordnet ist, die durch das Gehäuse nach aussen geführt sind und die je mit einem getriebelosen Direktantrieb (2a, 2b) wirkverbunden sind.

3. Vorrichtung nach Anspruch 1 oder 2, **dadurch gekennzeichnet, dass** die Zahnradpumpe (1) und der bzw. die Direktantriebe (2; 2a, 2b) auf einem Ständerelement (3) angeordnet sind.

4. Vorrichtung nach einem der Ansprüche 1 bis 3, **dadurch gekennzeichnet, dass** eine Temperiereinheit (8) vorgesehen ist, welche mit mindestens einem Temperiermediumtransportsystem (9) verbunden ist, wobei ein Temperiermediumtransportsystem (9) auf einen getriebelosen Direktantrieb (2; 2a, 2b) zur Einstellung der Temperatur im jeweiligen Direktantrieb (2; 2a, 2b) einwirkt.

5. Vorrichtung nach einem der Ansprüche 1 bis 4, **dadurch gekennzeichnet, dass** der getriebelose Direktantrieb (2; 2a, 2b) ein Ringmotor ist.

6. Vorrichtung nach Anspruch 4 oder 5, **dadurch gekennzeichnet, dass** das Gehäuse der Zahnradpumpe (1) mit einem Temperierkreislauf aufweist, welcher vorzugsweise mit dem Temperiermediumtransportsystem (9) verbunden ist.

7. Extrusionsanlage mit mindestens einer Vorrichtung nach einem der Ansprüche 1 bis 6.
